(19) Europäisches Patentamt
European Patent Office
Office européen des brevets

(11) Numéro de publication : **0 453 362 B1**

(12) **FASCICULE DE BREVET EUROPEEN**

(45) Date de publication du fascicule du brevet : **07.12.94 Bulletin 94/49**

(51) Int. Cl.$^5$ : **G03H 1/02**, G02F 1/35

(21) Numéro de dépôt : **91401021.0**

(22) Date de dépôt : **17.04.91**

(54) **Dispositif de traitement d'hologrammes dynamiques utilisant un film mince polymérique à caractère photoréfractif.**

(30) Priorité : **19.04.90 FR 9005018**

(43) Date de publication de la demande : **23.10.91 Bulletin 91/43**

(45) Mention de la délivrance du brevet : **07.12.94 Bulletin 94/49**

(84) Etats contractants désignés : **BE CH DE GB LI NL**

(56) Documents cités :
**EP-A- 0 047 162**
**APPLIED PHYS. LETT., vol. 17, no. 10, 15 novembre 1970, pages 416-418; D.S. OLIVER et al.: "Image storage and optical readout in a ZnS device"**
**PATENT ABSTRACTS OF JAPAN, vol. 13, no. 134 (C-581), 4 avril 1989 & JP A 63 301 227**
**OPTICS LETTERS, vol. 4, no. 1, janvier 1979, pages 21-23, J.P. HUIGNARD et al.: "Phase-conjugate wavefront generation via real-time holography in Bi12SiO20 crystals"**
**QUANTUM ELECTRONICS AND LASER SCIENCE CONFERENCE TECHN. DIGEST, USA MEETING, Baltimore, 24 - 28 avril 1989, résumé no. WDD9; S. DUCHARME et al.: "Possibility for photorefractive effects in organic electrooptic crystals"**
**PROCEEDINGS OF SPIE, vol. 971, 1988, pages 230-238, SPIE, Bellingham, US; G.T. BOYD et al.: "Organic materials requirements and design criteria for an electro-optic phase shifter"**
**PROCEEDINGS OF SPIE, vol. 971, 1988, pages 252-259, SPIE, Bellingham, US; G.R. MÖHLMANN et al.: "Organic polymers as optically nonlinear media"**
**IBM JOURN. RES. DEVELOP, vol. 15, janvier 1971, pages 75-89; R.M. SCHAFFERT: "A new high-sensitivity organic photoconductor for electrophotography"**

(56) Documents cités :
**JOURN. OPT. SOC. AM, vol. 4B, no. 6, juin 1987, pages 1025-1029; P.P. HO et al.: "Ultrafast resonant optical Kerr effect in 4-butoxycarbonylmethylurethane polydiacetylene"**

(73) Titulaire : **COMMISSARIAT A L'ENERGIE ATOMIQUE**
**31-33, rue de la Fédération**
**F-75015 Paris (FR)**

(72) Inventeur : **Nunzi, Jean-Michel**
**9, rue d'Aquitaine**
**F-92160 Antony (FR)**

(74) Mandataire : **Mongrédien, André et al**
**c/o BREVATOME**
**25, rue de Ponthieu**
**F-75008 Paris (FR)**

EP 0 453 362 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention a pour objet un dispositif de traitement d'hologrammes comportant un film mince polymérique à caractère photoréfractif. Ce dispositif peut être utilisé pour l'enregistrement, l'effacement et la reconstitution d'hologrammes dynamiques, mais aussi pour l'amplification d'images, le mélange d'ondes en vue notamment d'une restauration de fronts d'onde déformés et pour la diffraction d'ondes.

Comme indiqué dans le document D1 - P. GUNTER et H.J. EICHLER, Electrooptic and Photorefractive materials, "Introduction to photorefractive materials", Edité par P. Günter, Springer Berlin, p. 206-228, 1987 - , l'effet "photoréfractif" est la modification de l'indice de réfraction d'un matériau sous l'action de la lumière. Il est utilisé pour réaliser des hologrammes dynamiques ayant une grande efficacité de diffraction pour une faible intensité lumineuse d'inscription. Les matériaux "photoréfractifs" sont des matériaux photoconducteurs et électrooptiques.

Lorsqu'ils sont éclairés, la lumière d'intensité I crée des charges libres qui se déplacent par photoconduction dans le matériau pour laisser subsister un champ électrique $E_{sc}$ dû aux charges d'espace résultant de cette migration. Ce champ électrique $E_{sc}$ a la même modulation spatiale que l'intensité lumineuse excitatrice I. Il agit sur le coefficient électrooptique r pour changer localement l'indice de réfraction n du matériau de la valeur dn selon l'équation (1) :

$$dn = n^3 r E_{sc} \quad (1)$$

C'est ainsi que sont enregistrés les hologrammes dynamiques dans des cristaux de matériaux "photoréfractifs". Les matériaux photoréfractifs utilisés à ce jour sont tous des minéraux.

L'efficacité de diffraction de ces hologrammes est directement liée à la valeur de dn. Or, le coefficient électrooptique r est une constante pour un matériau donné (de 1 à $100.10^{-12}$ m/V). Dans les matériaux "photoréfractifs" connus, le champ de charges d'espace $E_{sc}$ possède une valeur maximum $E_{sc}^{max}$ qui est limité par la densité et la nature des défauts accepteurs ou donneurs de charges (voir à cet effet le document D1).

Cette valeur limite est donnée par la relation (2)

$$E_{sc}^{max} = e.N.P/2n.\varepsilon \quad (2)$$

où e est la charge de l'électron ($1,6.10^{-19}$C), P est le pas du réseau holographique, typiquement $10^{-4}$cm, $\varepsilon$ est la constante diélectrique statique, typiquement $4.10^{-12}$F/cm et N est la densité de défauts chargés, typiquement $10^{17}/cm^3$.

Le champ $E_{sc}$ est donc limité à $10^5$V/cm dans le meilleur des cas, limitant ainsi la variation d'indice dn. D'autre part, ce champ $E_{sc}$ est toujours fonction du pas P du réseau holographique, inscrit, ce qui conduit à une dégradation des images holographiques, inhérente au processus.

Il est connu, depuis plus de 10 ans, d'appliquer un champ électrique extérieur $E_{ext}$ à des cristaux minéraux "photoréfractifs" pour en améliorer les performances (voir à cet effet le document D1). Ce champ électrique extérieur qui est appliqué parallèlement au plan du cristal, comme l'indique la figure 3 du document D1, sert à accélérer le processus de migration des charges électriques, mais le champ de charge d'espace demeure toujours limité par la valeur $E_{sc}^{max}$ (voir équation (2)).

Par ailleurs, il est connu de polariser des couches minces organiques afin d'orienter les molécules actives qui vont produire un effet électrooptique ou de mesurer ces mêmes propriétés électrooptiques (voir à cet effet le document D2 - R. LYTEL et al. "Organic electrooptic waveguide modulators and switches", Nonlinear Optical Properties of Organic Materials SPIE, vol. 971, p. 218-229, 1988 -).

Il est aussi connu de polariser des matériaux photoconducteurs pour faire de l'électrophotographie, comme le montre le document D3 - R.M. SCHAFFERT "A new high-sensitivity organic photoconductor for electrophotography", IBM J Res. Develop., 15, p. 75-89, 1971 -.

Par ailleurs, il existe des dispositifs holographiques comportant un élément actif en couches minces dans lequel le champ extérieur fournit du travail à un matériau photoconducteur pour modifier les propriétés de réfraction d'un matériau électroactif : cristal liquide, cristal ferroélectrique ou élastomère (procédé Ruticon) (voir à cet effet le document D4 - J. BORDOGNA et S.A. KENEMAN, "Other material and devices", Holographic Recording Materials, Edité par H.M. Smith, Spinger Berlin, p. 229-244, 1977).

Dans ces dispositifs, on n'utilise pas l'effet "photoréfractif". En effet, la non linéarité optique provient de phénomènes collectifs lents (de l'ordre de 0.1s), tels que la réorientation des molécules pour les ferroélectriques et les cristaux liquides ou la compression du matériau due à la force électrostatique de surface pour les élastomères.

De plus, le milieu électroactif est différent du milieu photoconducteur. Ainsi, l'élément actif est constitué d'une couche optiquement électroactive (ou électro-optique) superposée à une couche photoconductrice, le tout étant pris entre deux électrodes de polarisation.

Pour remédier aux inconvénients des dispositifs de traitement d'hologrammes dynamiques connus, l'invention propose de remplacer les minéraux "photoréfractifs" par des films minces polymériques à caractère "photoréfractif" et de polariser ces films minces sous une tension appliquée uniformément sur ces films afin qu'ils soient soumis à un champ électrique extérieur perpendiculaire au film remplaçant le champ électrique de charge d'espace. De plus, ces films polymériques sont des films plastiques amorphes, c'est-à-dire modelables et à structure désordonnée, alors que jusqu'à ce jour les matériaux "photoréfractifs" utilisés se présentaient sous forme cristalline.

De façon plus précise, l'invention a pour objet un dispositif de traitement d'hologrammes dynamiques comportant un composant actif constitué d'une couche active photoconductrice et électro-optique de polymère plastique et amorphe, des moyens d'adressage d'au moins deux faisceaux lumineux sur la couche active apte à y créer un réseau holographique, des moyens de polarisation électrique de la couche active pour y engendrer un champ électrique selon une direction perpendiculaire à l'étendue de la couche active et des moyens d'annulation aptes à annuler le champ électrique appliqué sur la couche active lorsqu'elle est rendue conductrice par photoconduction.

Dans la suite de la description on désignera par "couche à caractère photoréfractif", une couche active photoconductrice et électro-optique.

Dans l'invention, on utilise la non linéarité électronique instantanée de polymères organiques, ce qui n'est pas le cas des matériaux du document D4.

L'illumination du composant actif crée des charges électriques, qui en migrant vers la surface de la couche active, modulent localement le champ électrique appliqué sur le matériau. Le champ électrique de charges d'espace $E_{sc}$ est dans ce cas remplacé par le champ extérieur $E_{ext}$.

L'application, conformément à l'invention d'un champ électrique externe perpendiculaire à l'étendue du réseau holographique, contrairement à l'art antérieur où le champ électrique externe était toujours appliqué parallèlement à l'étendue du réseau holographique, permet de remplacer le champ électrique de charges d'espace $E_{sc}$ par le champ électrique extérieur et d'augmenter ainsi la valeur de ce champ $E_{sc}$ et donc celle de la variation d'indice.

En particulier, il est possible d'appliquer un champ électrique extérieur $E_{ext}$ supérieur à $10^5$ V/cm et par exemple de l'ordre de $10^6$ V/cm et donc de créer un champ de charges d'espace de l'ordre de $10^6$V/cm.

Ceci permet d'améliorer l'état de l'art des matériaux photoréfractifs minéraux sur trois points essentiels :

a) - gain sur le champ électrique conduisant à une variation d'indice dn de 10 à 100 fois plus grande que d'ordinaire (voir équation 1) ;

b) - gain sur la qualité de l'inscription holographique car la variation d'indice dn est alors insensible au pas P du réseau (voir équation 2) ;

c) - gain sur le processus de photoconduction qui est plus efficace et plus rapide sous l'application d'un champ électrique plus intense.

L'utilisation des polymères dans ce contexte apporte plusieurs avantages décisifs aux dispositifs de traitement d'hologrammes dynamiques :

1) - bonnes propriétés diélectriques permettant une tenue à des champs $E_{ext}$ de $10^6$V/cm et grande résistivité dans l'obscurité sous fort champ électrique atteignant $10^{13}$ohms/cm ;

2) - faible constante diélectrique statique relative, inférieure à 5, au lieu de 50 typiquement dans les minéraux, ce qui améliore le temps de réponse de l'effet photoréfractif ;

3) - grands coefficients électro-optiques r accessibles et rapidité subpicoseconde de la réponse ;

4) - bonne qualité optique des matériaux amorphes permettant de réaliser des guides de lumière plans à faibles pertes ;

5) - technologie de mise en oeuvre compatible avec celles de la microélectronique (possibilié d'hybridation).

Par ailleurs, l'utilisation de polymères solubles présente l'avantage d'un faible coût de mise en oeuvre, sous forme de films minces de grandes dimensions (de 10 à 100 $cm^2$), diminuant ainsi le coût total du dispositif de traitement de l'invention.

Il n'existe pas à l'heure actuelle de matériaux photoréfractifs organiques reconnus pour tels dans l'art antérieur. Le document D5 - S. DUCHARME et al., "Possibility for photorefractive effects in organic electro-optic crystal" n° WDD9, Quantum Electronics and Laser Science Conference Technical digest of OSA Meeting, 1989 - est le seul document de prospectives publié sur ce sujet à ce jour.

Pour réaliser une couche active mince à caractère photoréfractif, l'invention propose l'utilisation d'un matériau composite constitué d'une matrice polymérique photoconductrice soluble dans laquelle on a incorporé des molécules organiques électro-actives. En variant la composition moléculaire de la couche active ou bien sa structure, on peut doser les effets photoconducteur et électro-optique, ce qui permet d'optimiser les conditions de fonctionnement du dispositif en toute circonstance.

La matrice photoconductrice renferme de 2 à 20% en poids de molécules électro-actives et par exemple

de 5% à 10% environ. Cette matrice peut consister en un homopolymère ou en un copolymère.

La polarisation permanente de la couche active sous un champ électrique intense permet de bloquer les molécules non linéaires des composites de polymères amorphes électro-optiques dans une configuration stable dans le temps, alors qu'elles relaxent autrement, comme indiqué notamment dans le document D6 - G.R. MOHLMANN et al., "Organic polymers as optically non linear media", Nonlinear Optical Properties of Organic Materials, SPIE, Vol. 971, p. 252-259, 1988 -.

Les molécules organiques électro-actives sont choisies pour leur faculté d'orientation sous champ électrique, donnant un grand coefficient électro-optique r. En pratique, on utilise un colorant organique identique en tout point à ceux utilisés dans des modulateurs électro-optiques en film mince.

Ces molécules électro-actives sont en particulier celles décrites dans les documents D2 et D6 et dans la publication D7 - J.E. SOHN et al. "Orientationally ordered nonlinear optical polymer films", Nonlinear Optical Effects in Organic Polymers, édité par J. Messier et al., p. 291-297, 1989 -.

Les méthodes d'orientation des molécules électro-actives et du gel de leur mouvement dans un polymère photoconducteur sont en particulier celles décrites dans les documents D2, D6 et D7 et dans le document D8 _ BOYD et al., "Organic materials requirements and design criteria for an electro-optique phase shifter", Nonlinear Optical Properties of Organic Materials, SPIE, vol. 971, p. 230-238, 1988 -.

L'orientation des molécules et le gel de leurs mouvements permet d'obtenir dans la pratique des coefficients électro-optiques r allant de 2 à $30.10^{-12}$m/V. (Voir le document D2).

De façon générale, les molécules organiques électro-actives (ou à propriétés optiques non linéaires) de l'invention sont des molécules à structure moléculaire non centrosymétrique, comportant un système d'électrons $\pi$ délocalisés. Ce système d'électrons délocalisés est généralement dû à la présence de liaisons multiples dans la chaîne carbonée du matériau organique. En outre, ces molécules comportent généralement des groupements à transfert de charge ou des groupements polaires de façon dissymétrique aux extrémités de la chaîne.

Comme molécule électro-active utilisable dans l'invention on peut citer la métanitroaniline (mNA), la N,N-diméthylaniline (DMA), la 2-méthyl-4-nitroaniline (MNA), la paranitroanilinne (p-NA), le 4-diméthylamino-4'-nitrostilbène (DANS), le 4-méthoxy-4'-nitrostilbène (MONS).

La matrice en polymère photoconducteur peut être réalisée, conformément à l'invention, par du poly-N-vinyl carbazole noté PVCz, un copolymère de PVCz et de 2,4,7-trinitro-9 fluorénone (TNF) ou bien un polymère conjugué, tel que les polydiacéthylènes ou les polythiophènes solubles.

Ces polymères conjugués présentent l'avantage d'une grande vitesse de recombinaison des porteurs libres permettant un cyclage à grande cadence (jusqu'à $10^9$ Hz) du dispositif. L'inconvénient est un rendement quantique de photocréation plus faible.

Lorsque la matrice photoconductrice est en polyvinyl-carbazole, il est possible d'améliorer le temps de retour à l'équilibre (ou temps de cyclage) de l'élément actif du dispositif de l'invention en appliquant un champ électrique extérieur alternatif. Pour tous les autres polymères photoconducteurs, on applique un champ extérieur continu.

Les polydiacétylènes présentent la formule générale (I) :

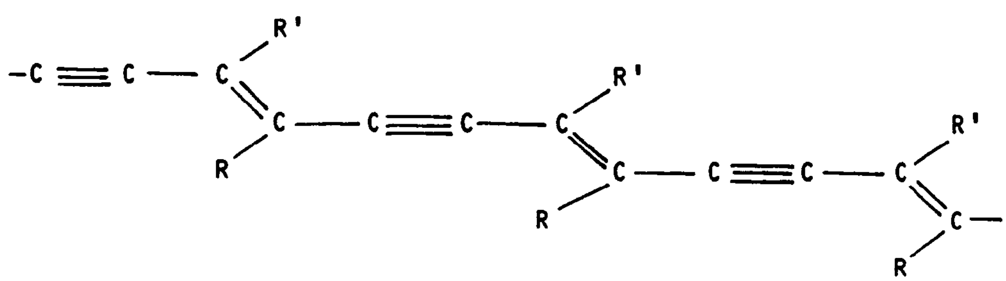

(I)

avec R et R' des radicaux alkyle , amide , ... de 1 à 10 atomes de carbone.

Les polythiophènes présentent la formule générale (II) :

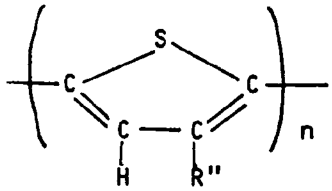

(II)

avec R″ représentant un atome d'hydrogène ou un radical alkyle de 1 à 10 atomes de carbone.

Les inventeurs ont trouvé que la couche active du dispositif de l'invention peut aussi être constituée essentiellement d'un polymère, homopolymère ou copolymère conjugué, ayant à la fois des propriétés photoconductrices et des propriétés électro-optiques lorsqu'il est polarisé. Ce polymère est par exemple un polydiacétylène de formule (I).

En particulier :

R'=R= 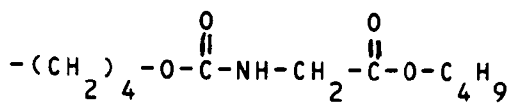

et ce composé est appelé le poly(4-BCMU).

Comme polymère conjugué ayant à la fois des propriétés photoconductrices et électro-actives lorsqu'il est polarisé, on peut encore citer les polythiophènes de formule (II).

En particulier, R″=$-(CH_2)_5-CH_3$, ce qui correspond au poly(3-héxylthiophène).

On peut aussi envisager d'utiliser beaucoup d'autres polymères conjugués tels des dérivés du polyacétylène, du polyparaphénylène, du polypyrrole, de la polyaniline. Ces derniers sont optiquement non linéaires et photoconducteurs ; ils peuvent être rendus solubles et adaptés à l'invention par substitution de groupes latéraux R et R′ appropriés.

De façon générale, les polymères ayant à la fois des propriétés photoconductrices et électroactives lorsqu'on les polarise sont ceux présentant un effet KERR optique élevé aux longueurs d'onde proches du seuil de photoconduction.

Les polymères conjugués ci-dessus ont l'avantage de présenter une grande non linéarité optique du 3ème ordre $X^{(3)}$ de l'ordre de $10^{-17}(m/V)^2$ en lumière visible, à la limite entre la zone de transparence optique et la zone d'absorption (0,4 eV en-dessous du maximum d'absorption). Ceci fait que, sans incorporation de molécules organiques électro-actives à ces polymères, ils offrent un coefficient électro-optique effectif r, sous l'application d'un champ électrique continu $E_{ext}$ de l'ordre de $10^6$V/cm :

$$r = \frac{X^{(3)} E_{ext}}{2\, n^4} \simeq 30.10^{-12}\ m/V\ (avec\ n = 2)$$

Ce coefficient, qui est comparable à celui du niobate de lithium, est remarquable et justifie, à lui-seul, l'intérêt de l'élément actif polarisé du dispositif de traitement d'hologrammes dynamiques, conforme à l'invention.

Dans l'invention, on utilise une seule couche ayant à la fois des propriétés électro-optiques et des propriétés photoconductrices. Ceci permet, par rapport aux dispositifs connus comportant un empilement d'une couche photoconductrice et d'une couche électro-active, d'éviter tous les problèmes d'interface entre ces deux couches nuisant au bon fonctionnement du dispositif et en particulier sur le temps de réponse du dispositif.

L'application du champ électrique externe peut être réalisée par un gaz ionisé (appelée aussi polarisation par effet corona), appliqué directement sur la couche active ou bien être obtenue grâce à deux électrodes disposées de part et d'autre de la couche active sur lesquelles on applique une différence de potentiel.

Selon l'application envisagée pour le dispositif de l'invention, ces électrodes peuvent être transparentes ou opaques. Pour un fonctionnement en transmission de lumière, les deux électrodes sont nécessairement transparentes, pour un fonctionnement en réflexion, une seulement des électrodes doit être transparente, et pour un fonctionnement en guide d'ondes les deux électrodes peuvent être opaques.

Comme matériau destiné à réaliser des électrodes transparentes conformément à l'invention, on peut citer l'oxyde d'indium et d'étain connu sous l'abréviation ITO, l'oxyde d'indium $In_2O_3$. Comme électrode opaque utilisable dans l'invention, on peut citer des électrodes métalliques et en particulier des électrodes en aluminium, cuivre, or ou argent.

Conformément à l'invention, des moyens d'annulation du champ électrique appliqué à la couche active, lorsqu'elle est rendue conductrice par photoconduction, doivent être prévus. La constitution de ces moyens

dépend essentiellement de l'utilisation prévue pour le dispositif de l'invention.

En particulier, ces moyens d'annulation peuvent être réalisés à l'aide d'une ou deux couches tampons en matériau isolant électrique ou faiblement conducteur, intercalé entre la couche active photoréfractive et les électrodes. Ces couches tampons doivent présenter une grande résistivité électrique (facteur 10) devant celle de la couche active lorsque cette dernière est à l'état conducteur. En outre, elles doivent présenter une tenue diélectrique suffisante pour supporter, sans claquage, la tension appliquée sur les électrodes.

Le dispositif de l'invention peut être utilisé dans toutes les applications connues des dispositifs de traitement d'hologrammes dynamiques utilisant des matériaux photoréfractifs minéraux cristallins selon l'art antérieur. On distingue deux types de fonctionnement, le fonctionnement en ondes libres et le fonctionnement en guide d'ondes plan.

Dans le fonctionnement en guide d'ondes plan, il faut que les faisceaux lumineux adressés sur l'élément actif soient guidés le long de la couche active.

Si l'on utilise deux électrodes transparentes, il faut utiliser deux couches tampons, disposées de part et d'autre de la couche active, et que l'indice de réfraction de ces couches tampons soit inférieur à celui de la couche active. Cette condition est pratiquement toujours remplie dans la pratique car la couche active est utilisée dans une région du spectre optique où elle absorbe la lumière et a, de ce fait, un fort indice de réfraction (au moins égal à 1,6).

Dans le fonctionnement en transmission et en ondes libres, il est inutile d'avoir deux couches tampons ; une seule couche tampon suffit et il n'y a plus alors de condition sur l'indice de réfraction.

Dans la pratique, on utilise comme couches tampons des polymères solubles dans des solvants organiques et en particulier des résines de microlithographie (du type polysilane ou polysiloxane) ou bien en polyméthacrylate de méthyle (PMMA), ou un polyalcool de vinyle.

Le dépôt des couches tampons polymériques sur la couche active étant effectué par enduction de cette dernière avec une solution contenant le polymère désiré dissous dans un solvant, il est nécessaire de veiller à la compatibilité de ce solvant avec celui utilisé pour le dépôt de la couche active.

Comme couche tampon, on peut aussi utiliser une couche mince d'oxyde de silicium évaporé sous vide.

Les couches tampons et la couche active ont respectivement une épaisseur de quelques micromètres, typiquement de 1 à 3 micromètres, pour une épaisseur inter-électrode allant de 2 à 12 micromètres.

La tension appliquée sur les électrodes est de quelques centaines de volts, afin de soumettre la couche active à un champ $E_{ext}$ de 100V/$\mu$m environ.

Les dimensions transverses de l'élément actif sont ajustées à la forme expérimentale désirée (quelques $mm^2$ ou $cm^2$).

Dans le fonctionnement en ondes libres, les faisceaux lumineux doivent avoir la même polarisation, quelconque par rapport à l'élément actif.

En revanche, dans le fonctionnement en mode guidé, il est préférable de travailler en mode transverse magnétique, le mode transverse électrique subissant une non linéarité environ trois fois plus faible. Ceci est obtenu en utilisant des faisceaux incidents polarisés parallèlement au champ électrique appliqué à la couche active.

Le couplage des ondes lumineuses avec le guide d'ondes s'effectue selon les méthodes classiques de "couplage par la tranche", de réflexion totale atténuée ou de réseau. Dans cette situation, la longueur d'interaction des faisceaux lumineux étant supérieure à l'épaisseur du composant actif, mesurée selon la direction parallèle aux faisceaux, on obtient des rendements de diffraction holographiques ou de mélanges à deux ondes voisins de 100%. C'est le cas à 630nm dans une couche mince de polydiacéthylène et en particulier de poly(4-BCMU).

Le gain photoréfractif de diffraction holographique est alors proche de $10^3/cm^2$.

Il est possible d'utiliser un composant actif sans couche tampon. Dans ce cas, les électrodes de polarisation sont en métal. Le guide de lumière est alors un guide d'ondes métallique à fortes pertes de propagation, analogue à ceux que l'on utilise par ailleurs, pour mesurer des coefficients électro-optiques.

Dans un tel guide, l'intensité lumineuse est nulle au voisinage des électrodes métalliques, d'où l'inutilité des couches tampons pour annuler le champ électrique lorsque la couche active est rendue conductrice par photoconduction. Le résultat est un composant actif capable de fonctionner en régime nanoseconde quel que soit le temps de recombinaison des charges libres dans la couche active, et en particulier dans la matrice photoconductrice dans le cas d'une couche active constituée de molécules électro-actives piégées dans une matrice photoconductrice.

On utilise simplement la répartition d'intensité propre aux guides métalliques qui induit une modulation de la photoconductivité à travers la couche active.

Pour des questions de tenue mécanique, le composant actif peut en outre comporter au moins un substrat.

D'autres caractéristiques et avantages de l'invention ressortiront mieux de la description qui va suivre,

donnée à titre illustratif et non limitatif, en référence aux dessins annexés, dans lesquels :

- la figure 1 représente schématiquement un premier mode de réalisation d'un dispositif conforme à l'invention permettant la restauration de fronts d'ondes déformés,
- la figure 2 représente schématiquement un second mode de réalisation d'un dispositif conforme à l'invention permettant l'amplification d'images bidimensionnelles en surface,
- la figure 3 représente schématiquement un troisième mode de réalisation du dispositif conforme à l'invention, utilisé pour l'amplification d'images unidimensionnelles en volume,
- la figure 4 représente schématiquement l'élément actif du dispositif de la figure 3, selon une coupe IV-IV,
- la figure 5 est une variante de réalisation de l'élément actif de la figure 4, et
- la figure 6 représente schématiquement un quatrième mode de réalisation du dispositif conforme à l'invention, utilisé pour l'adressage bidimensionnel.

Le dispositif représenté sur la figure 1 fonctionne en ondes libres et assure le mélange de deux ondes lumineuses. Il comprend un laser excitateur 2 émettant un faisceau monochromatique qui est reçu par deux lames séparatrices 4 et 6 à 50% disposées en cascade ; elles permettent la formation de deux faisceaux 8 et 10 interceptés par le composant actif 12 du dispositif. Un miroir 14 placé derrière le dispositif 12 permet de réfléchir le faisceau 8 sur le composant actif 12.

Le faisceau incident 8 et le faisceau réfléchi par le miroir 14 servent à l'excitation du composant actif 12.

Le faisceau 10, appelé faisceau test, a par rapport aux faisceaux excitateurs incident et refléchi 8 un front d'ondes déformé dû à la présence d'un objet 11.

Dans le mode représenté sur la figure 1, les faisceaux lumineux 8 et 10 incidents abordent le composant 12 du même côté et traversent le dispositif de part en part (fonctionnement en transmission). Dans ces conditions, les différentes couches constituant le composant 12 doivent être transparentes à la lumière émise par la source laser 2.

Conformément à l'invention, le composant 12 comporte une couche active 16 en poly(4-BCMU), matériau photoconducteur et électro-optique, de 10 micromètres environ, une couche tampon 18 disposée du côté du miroir 14 en polyméthacrylate de méthyle (PMMA), isolant électrique, de 1 micromètre d'épaisseur, et deux électrodes 20 et 22 en ITO, de 0,1 micromètre connectées respectivement aux deux bornes d'une source d'alimentation électrique continue 24, délivrant environ 1100V continu. La couche active est sous forme amorphe et plastique.

Afin d'assurer la rigidité du composant 12, un substrat inférieur 26 et un substrat supérieur 28 complètent la structure. Ces substrats sont en particulier en silice fondue et ont une épaisseur de 1 mm.

L'interaction des faisceaux 8 et 10 donne naissance à un hologramme dynamique s'étendant de part et d'autre de la couche active 16 en matériau photoréfractif. Les zones hachurées portant la référence 13 sont une visualisation des franges d'interférences des faisceaux excitateurs dans la couche active 16.

La source 24 permet l'application d'un champ électrique $\vec{E}$ , selon une direction z, perpendiculaire à l'étendue l du réseau holographique, mesurée selon la direction x parallèle au plan des couches.

Là où l'intensité lumineuse est maximum, le champ externe appliqué sur la couche active 16, via les électrodes 20 et 22, produit un réseau d'indice assurant la réflexion partielle du faisceau 10 en sens inverse (conjugaison de phases), via la diffraction du faisceau 8 réfléchi par le miroir 14, avec un taux de réflexion de 20% environ.

Le faisceau 10 réfléchi traverse alors la lame semi-réfléchissante 6 ; il contient le signal lumineux incident 8 reconstruit malgré l'objet déformant 11.

Dans le fonctionnement en ondes libres, la polarisation des faisceaux lumineux n'est pas une qualité essentielle, si ce n'est qu'il est préférable que tous les faisceaux aient la même polarisation. Cette polarisation est en particulier parallèle à la direction x ou y, parallèle aux plans des couches.

Le temps de réponse du composant actif 12 est lié à l'illumination du laser excitateur 2. Pour que le système 12 réponde aux faisceaux lasers excitateurs, il faut que ces derniers créent assez d'électrons pour annuler le champ électrique extérieur, dans la couche active 16, appliqué en continu via les électrodes 26 et 28. Ceci représente une illumination de l'ordre de $10^{13}$ photons/$cm^2$ ($3,10^{-6}$ J/cm).

Avec un laser excitateur continu de 0,1 W/$cm^2$ d'intensité, ce qui correspond à un laser commercial, le temps de réponse t est de 30 microsecondes et le temps t est inversement proportionnel à l'intensité du laser, pour une longueur d'onde donnée.

Dans le dispositif représenté sur la figure 1, l'excitation du composant actif 12 peut être assurée par un laser hélium-néon dont la longueur d'onde est de 594 nm, la puissance de 1 milliwatt et le diamètre du faisceau de 1 mm.

Le dispositif de la figure 1 permet une restauration des fronts d'ondes déformés par l'objet 11 ; il permet

notamment une compensation des déformations optiques dues à l'objet 11, par exemple la compensation des perturbations dues à un milieu gazeux (atmosphère en particulier), ou à la traversée d'une fibre optique multimode.

Le composant actif 12 de la figure 1 peut aussi être utilisé, comme représenté sur la figure 2, dans un dispositif d'amplification d'images de surface, à deux dimensions.

Ce dispositif est destiné à l'amplification d'images d'objets de grande surface. Il comporte une source laser 2 émettant un faisceau lumineux que l'on collimate et amplifie grâce à un système du type télescope symbolisé par une lentille divergente 32 suivie d'une lentille convergente 34. Le faisceau lumineux agrandi et collimaté (grandissement 10 par exemple) est alors reçu par une lame séparatrice 36 à 50% donnant naissance à deux faisceaux lumineux 38 et 40 respectivement d'excitation et de test.

Sur le faisceau de test 40 est placé l'objet 11 dont l'image est à amplifier. Le faisceau 42 réfléchi par l'objet 11 est reçu par le composant optique actif 12.

Par ailleurs, le faisceau d'excitation 38 est réfléchi sur un miroir piézoélectrique 44 excité par un générateur haute fréquence 41 (0,1 à 100 kHz et typiquement 0,3kHz), et le faisceau ainsi réfléchi 43 est reçu par le composant actif 12 pour interférer avec le faisceau 42 réfléchi par l'objet à amplifier. Le faisceau 46 issu du composant actif 12 donne l'image amplifiée par un facteur 2 de l'objet 11. Cette image est une image de surface et ne donne aucun effet de profondeur.

Le miroir piézoélectrique 44 peut être remplacé par un modulateur acousto-optique ou par l'entrefer d'un haut-parleur d'aigus (tweeter en terminologie anglo-saxonne), alimenté par un générateur haute fréquence 0,10 à 100 kHz et typiquement 0,30 kHz. La fréquence d'excitation est à ajuster en fonction de l'intensité lumineuse du faisceau incident 38 pour l'optimisation de l'amplification d'image (plus l'intensité est grande et plus la réponse est rapide, donc la fréquence élevée).

Dans le dispositif de la figure 2, la source laser est un laser à hélium-néon délivrant un faisceau de 594nm de longueur d'onde et de 0,1W/cm$^2$ d'intensité. Dans ces conditions, le faisceau 43 a une intensité lumineuse de 0,5$\mu$W/cm$^2$ pour une fréquence d'oscillation du miroir de 0,3 kHz.

Sur les figures 3 et 4, on a représenté un amplificateur d'images en volume, à une dimension. Dans ce mode de réalisation, le composant actif 12a du dispositif de traitement fonctionne en guide d'ondes.

Le faisceau lumineux sortant du laser 48 est polarisé verticalement, c'est-à-dire selon une direction perpendiculaire au plan des couches du composant actif 12a. Sur la figure 4, P symbolise le vecteur polarisation.

Le faisceau lumineux polarisé issu du laser 47 est séparé en un faisceau d'excitation 38 et un faisceau test 40, réfléchis respectivement par l'objet 11 d'image à amplifier et le miroir piézoélectrique 44, excité à 30 kHz. Les faisceaux 42 et 43, ainsi réfléchis, sont dirigés et concentrés sur le composant actif 12a grâce à deux lentilles 49 et 48 de forme cylindrique, dont les axes sont parallèles au plan de la couche active 16 du composant 12a.

Le dispositif 12a (figure 4) est équipé de deux couches tampons 18 et 30 isolantes en PMMA de 1 micromètre d'épaisseur, disposées de part et d'autre de la couche active 16 en poly(4-BCMU) amorphe et plastique. Les couches 18 et 30 ont des indices de réfraction inférieurs à celui de la couche active de façon à constituer un guide d'ondes pour les faisceaux 42 et 43.

Pour assurer un couplage maximum de ces faisceaux avec le dispositif 12a, les faces latérales 15 et 17 de ce dernier, correspondant aux faces d'entrée et de sortie des faisceaux doivent être polies optiquement et la focale f des lentilles 49 et 48 telles que $f=ah/\lambda$, ou a est le diamètre des faisceaux lumineux, h l'épaisseur de la couche active et $\lambda$ la longueur d'onde du laser. Par exemple, si a=1mm, $\lambda$=630nm et h=10$\mu$m, f=16mm. Ce couplage est du type couplage par la tranche.

A titre d'exemple, le dispositif 12a représente un parallélépipède rectangle de 1nmx5nmx10$\mu$m.

Avec une configuration en mode guidé, on perd toute l'information optique hors du plan des électrodes, c'est-à-dire perpendiculaire aux électrodes, ce qui réduit la dimension des images selon l'axe longitudinal de l'objet 11, parallèle à la direction x. En revanche, on gagne sur l'épaisseur optique traversée, c'est-à-dire sur l'épaisseur du dispositif 12a mesurée selon la direction y perpendiculaire à la direction x, et donc sur le gain et sur la restitution de la profondeur des images. Cet effet est appelé effet stéréoscopique.

Le dispositif représenté sur les figures 3 et 4 permet une amplification d'un facteur 10. Il sert à l'amplification d'images d'objets longs et peu épais. Si l'on souhaite observer d'autres parties de l'objet 11, on peut toujours effectuer un balayage de celui-ci par le faisceau 40 selon la direction z, transversale.

Le gain sur l'épaisseur optique traversée permet en outre de travailler avec un laser à hélium-néon 47 émettant à 633nm, longueur d'onde où le poly(4-BCMU) est plus transparent qu'à 594nm. Ce laser 47 a l'avantage d'être moins cher que le laser à hélium-néon à 594nm. La puissance du laser 47 est encore de 1mW.

Il est même aussi possible de remplacer le laser hélium-néon par une diode laser émettant dans le rouge, assurant ainsi un encombrement minimum du dispositif de l'invention, une consommation énergétique et un coût plus faibles.

Il est aussi possible de remplacer le composant actif 12a du dispositif de la figure 3 par celui représenté sur la figure 5. Ce composant actif, de référence générale 12b, ne comporte plus de couches tampons isolantes. En revanche, les électrodes 20a et 22a, au contact direct de la couche active 16, sont réalisées en métal.

A titre d'exemple, on utilise des électrodes d'argent de 0,1 micromètre d'épaisseur et une couche active 16 en poly(4-BCMU) de 0,3 à 0,5 micromètre déposée à la tournette (méthode par centrifugation).

Le dispositif de traitement conforme à l'invention peut par ailleurs être utilisé pour faire de la diffraction d'onde. Un tel dispositif est schématisé sur la figure 6. Il comprend deux faisceaux excitateurs 38 et 42, dérivés d'un premier laser 2 à 594nm via la lame séparatrice 36, qui interférent dans la couche active 16 du composant actif 12, identique à celui décrit à la figure 1 ; il fonctionne en ondes libres et en transmission.

Là où l'intensité lumineuse est maximum, le champ externe appliqué à la couche 16 s'annule, ce qui produit le réseau d'indice symbolisé par 13 qui diffracte le faisceau lumineux 50, émis par un second laser 48. Les faisceaux 52 et 54 correspondent respectivement au faisceau transmis et diffracté par le composant 12.

En modifiant l'angle A1 formé entre les deux faisceaux excitateurs 38 et 42, on modifie le pas du réseau 13, et donc la direction du faisceau 54 diffracté ; c'est-à-dire l'angle A2 formé entre les faisceaux diffracté 54 et transmis 52.

L'angle A2, pour un réseau 13 fonctionnant dans les conditions de Bragg, est lié à A1 selon l'équation :

$$\sin A2/2 \simeq \frac{\lambda_2 \cdot n1}{\lambda_2 \cdot n2} \sin A1/2$$

où $\lambda 1$ et $\lambda 2$ représentent respectivement la longueur d'onde d'émission des lasers 2 et 48, typiquement 594nm et 633nm, n1 et n2 représentent respectivement l'indice de réfraction du milieu environnant et de la couche active 16 aux longueurs d'onde $\lambda 1$ et $\lambda 2$ (égaux en première approximation).

La description donnée précédemment n'a bien entendu été donnée qu'à titre illustratif, d'autres dispositifs de traitement d'hologrammes dynamiques peuvent être envisagés sans pour autant sortir du cadre de l'invention. Par exemple, dans un fonctionnement en mode guidé, le couplage des faisceaux 42 et 43 avec le composant 12a ou 12b peut être assuré à l'aide d'un prisme fonctionnant en réflexion totale atténuée, le dispositif 12a étant alors supporté par la face du prisme où se produit la réflexion totale. Un tel dispositif est décrit dans le document D9 - Y. LEVY et al. "Linear electrooptic coefficient of a ferroelectric polymer", Nonlinear Optical Effects in Organic Polymers, édité par J. Messier et al., p. 337-342, 1989-.

Par ailleurs, le couplage des faisceaux lumineux dans le guide optique peut être assuré à l'aide d'un réseau gravé par exemple dans l'une des couches tampons, comme décrit dans le document D8.

## Revendications

**1.** Dispositif pour générer un hologramme dynamique, ledit dispositif comportant :

- un composant actif (12) comprenant une couche (16) mince active d'un matériau photoréfractif ;
- des moyens (4, 6, 36, 44) pour superposer au moins deux faisceaux lumineux cohérents (8, 10, 38, 42, 43) dans ladite couche active afin d'y créer un réseau holographique (13) ;
- des moyens de polarisation électrique (20, 22, 20a, 22a, 24) de la couche active comportant des électrodes pour engendrer un champ électrique (E) selon une direction perpendiculaire à l'étendue (1) de la couche active ;

caractérisé en ce que le matériau photoréfractif est un polymère plastique et amorphe constitué d'une matrice polymérique photoconductrice où y sont incorporées des molécules organiques électro-actives, ou d'un polymère photoconducteur ayant des groupes électro-actifs.

**2.** Dispositif selon la revendication 1, caractérisé en ce que les électrodes (20, 22, 20a, 22a) sont disposées de part et d'autre de la couche active et sont alimentées par une source d'alimentation électrique (24), ces électrodes faisant partie intégrante du composant actif.

**3.** Dispositif selon la revendication 1 ou 2, caractérisé en ce que les électrodes métalliques sont réfléchissantes (20a, 20b) disposées directement sur la couche active, de part et d'autre de cette dernière.

**4.** Dispositif selon la revendication 2, caractérisé en ce qu'il comprend au moins une couche tampon (18, 30) en isolant électrique ou faiblement conducteur, intercalée entre la couche active (16) et l'une des électrodes de polarisation (20, 22).

**5.** Dispositif selon la revendication 2, caractérisé en ce qu'il comprend deux couches tampons (18, 30) en isolant électrique ou faiblement conducteur, disposées de part et d'autre de la couche active, entre cette

dernière et les électrodes (20, 22) de polarisation.

6. Dispositif selon la revendication 5, caractérisé en ce que les couches tampons présentent un indice de réfraction inférieur à celui de la couche active.

7. Dispositif selon la revendication 1, caractérisé en ce que la matrice renferme environ 5 à 10% en poids de molécules électro-actives.

8. Dispositif selon la revendication 1 ou 7, caractérisé en ce que le polymère photoconducteur est à base de polyvinyl-carbazole.

9. Dispositif selon l'une quelconque des revendications 7 à 8, caractérisé en ce que les molécules électro-actives sont des molécules à structure moléculaire non centrosymétrique, comportant un système d'électrons $\pi$ délocalisés.

10. Dispositif selon l'une quelconque des revendications 1 à 6, caractérisé en ce que la couche active (16) est réalisée en un matériau polymérique présentant un effet KERR optique élevé aux longueurs d'onde proches du seuil de photoconduction.

11. Dispositif selon l'une quelconque des revendications 1 à 6, caractérisé en ce que la couche active (16) est réalisée en un matériau choisi parmi les polydiacétylènes et les polythiophènes solubles.

12. Dispositif selon l'une quelconque des revendications 1 à 6, caractérisé en ce que la couche active (16) est réalisée en poly(4-BCMU).

13. Dispositif selon l'une quelconque des revendications 2 à 12, caractérisé en ce que le composant actif comporte, en outre, un ou deux substrats (26, 28) supportant les électrodes.

**Patentansprüche**

1. Vorrichtung zum Erzeugen eines dynamischen Hologramms, wobei die besagte Vorrichtung umfaßt:
   - ein aktives Bauelement (12), eine aktive Dünnschicht (16) aus einem photorefraktiven Material enthaltend;
   - Einrichtungen (4, 6, 36, 44) um wenigstens zwei kohärente Lichtbündel (8, 10, 38, 42, 43) in der besagten aktiven Schicht zu überlagern, um dort einen holographischen Raster (13) zu bilden;
   - Einrichtungen zur elektrischen Polarisierung (20, 22, 20a, 22a, 24) der aktiven Schicht, Elektroden zum Erzeugen eines elektrischen Feldes (E) in einer Richtung umfassend, die senkrecht ist zur Ausdehnung (1) der aktiven Schicht;

   **dadurch gekennzeichnet,** daß das photorefraktive Material ein plastisches und amorphes Polymer ist, gebildet durch eine photoleitfähige Polymer-Matrix, in die elektroaktive organische Moleküle eingebaut sind, oder durch ein photoleitendes Polymer mit elektroaktiven Gruppen.

2. Vorrichtung nach Anspruch 1, dadurch gekennzeichnet, daß die Elektroden (20, 22, 20a, 22a) beiderseits der aktiven Schicht angeordnet sind und gespeist werden durch eine Stromversorgungsquelle (24), wobei diese Elektroden integrierender Bestandteil des aktiven Bauelements sind.

3. Vorrichtung nach Anspruch 1 oder 2, dadurch gekennzeichnet, daß die metallischen Elektroden reflektierend sind (20a, 20b), angeordnet direkt auf bzw. an der aktiven Schicht, auf beiden Seiten dieser letzteren.

4. Vorrichtung nach Anspruch 2, dadurch gekennzeichnet, daß sie wenigstens eine Pufferschicht (18, 30) enthält, elektrisch isolierend oder schwach leitend, eingefügt zwischen die aktive Schicht (16) und eine der Polarisationselektroden (20, 22).

5. Vorrichtung nach Anspruch 2, dadurch gekennzeichnet, daß sie zwei Pufferschichten (18, 30) umfaßt, elektrisch isolierend oder schwach leitend, angeordnet auf beiden Seiten der aktiven Schicht, zwischen dieser letzteren und den Polarisationselektroden (20, 22).

6. Vorrichtung nach Anspruch 5, dadurch gekennzeichnet, daß die Pufferschichten einen Brechungsindex

aufweisen, der kleiner ist als der der aktiven Schicht.

7. Vorrichtung nach Anspruch 1, dadurch gekennzeichnet, daß die Matrix ungefähr 5 bis 10% Gewichtsprozent an elektroaktiven Molekülen einschließt.

8. Vorrichtung nach einem der Ansprüche 1 oder 7, dadurch gekennzeichnet, daß das photoleitfähige Polymer ein Polymer auf Polyvinyl-Carbazol-Basis ist.

9. Vorrichtung nach einem der Ansprüche 1 bis 8, dadurch gekennzeichnet, daß die elektroaktiven Moleküle Moleküle mit nichtzentrosymetrischer Molekularstruktur sind, die ein System von delokalisierten μ-Elektronen enthalten.

10. Vorrichtung nach einem der Ansprüche 1 bis 6, dadurch gekennzeichnet, daß die aktive Schicht (16) erzeugt wird aus einem Polymermaterial, das bei Wellenlängen nahe der Photoleitfähigkeitsschwelle einen hohen bzw. erhöhten optischen Kerr-Effekt aufweist.

11. Vorrichtung nach einem der Ansprüche 1 bis 6, dadurch gekennzeichnet, daß die aktive Schicht (16) hergestellt wird aus einem Material, das ausgewählt wird unter den löslichen Polydiacethylenen und den Polythiophenen.

12. Vorrichtung nach einem der Ansprüche 1 bis 6, dadurch gekennzeichnet, daß die aktive Schicht (16) hergestellt wird aus Poly(4-BCMU).

13. Vorrichtung nach einem der Ansprüche 2 bis 12, dadurch gekennzeichnet, daß das aktive Bauelement außerdem ein oder zwei Substrate (26, 28) umfaßt, die Elektroden tragend.

## Claims

1. Device for generating a dynamic hologram, said device including:
   - an active component (12) comprising an active thin layer (16) of a photorefractive material;
   - means (4, 6, 36, 44) for superposing at least two coherent light beams (8, 10, 38, 42, 43) in said active layer in order to create therein a holographic grating (13);
   - means (20, 22, 20a, 22a, 24) for electrical polarization of the active layer, including electrodes for forming an electric field (E) along a direction perpendicular to the length (1) of the active layer;

   characterized in that the photorefractive material is a plastic and amorphous polymer composed of a photoconductive polymeric matrix in which electroactive organic molecules are incorporated, or of a photoconductive polymer having electroactive groups.

2. Device according to Claim 1, characterized in that the electrodes (20, 22, 20a, 22a) are disposed on both sides of the active layer and are powered by an electrical power source (24), these electrodes forming an integral part of the active component.

3. Device according to Claim 1 or 2, characterized in that the metal electrodes are reflective (20a, 20b), being disposed directly on the active layer, on both sides of the latter.

4. Device according to Claim 2, characterized in that it comprises at least one buffer layer (18, 30) of an electrical insulator or a poor conductor, which buffer layer is intercalated between the active layer (16) and one of the polarizing electrodes (20, 22).

5. Device according to Claim 2, characterized in that it comprises two buffer layers (18, 30) of an electrical insulator or a poor conductor, which are disposed on both sides of the active layer, between the latter and the polarizing electrodes (20, 22).

6. Device according to Claim 5, characterized in that the buffer layers exhibit a refractive index less than that of the active layer.

7. Device according to Claim 1, characterized in that the matrix contains approximately 5 to 10% by weight of electroactive molecules.

**8.** Device according to Claim 1 or 7, characterized in that the photoconductive polymer is polyvinylcarbazole-based.

**9.** Device according to either one of Claims 7 to 8, characterized in that the electroactive molecules are molecules with a non-centrosymmetric molecular structure, including a system of delocalized $\pi$ electrons.

**10.** Device according to any one of Claims 1 to 6, characterized in that the active layer (16) is made of a polymeric material exhibiting a high KERR optical effect at wavelengths close to the photoconduction threshold.

**11.** Device according to any one of Claims 1 to 6, characterized in that the active layer (16) is made of a material selected from among polydiacetylenes and soluble polythiophenes.

**12.** Device according to any one of Claims 1 to 6, characterized in that the active layer (16) is made of poly(4-BCMU).

**13.** Device according to any one of Claims 2 to 12, characterized in that the active component further includes one or two substrates (26, 28) supporting the electrodes.

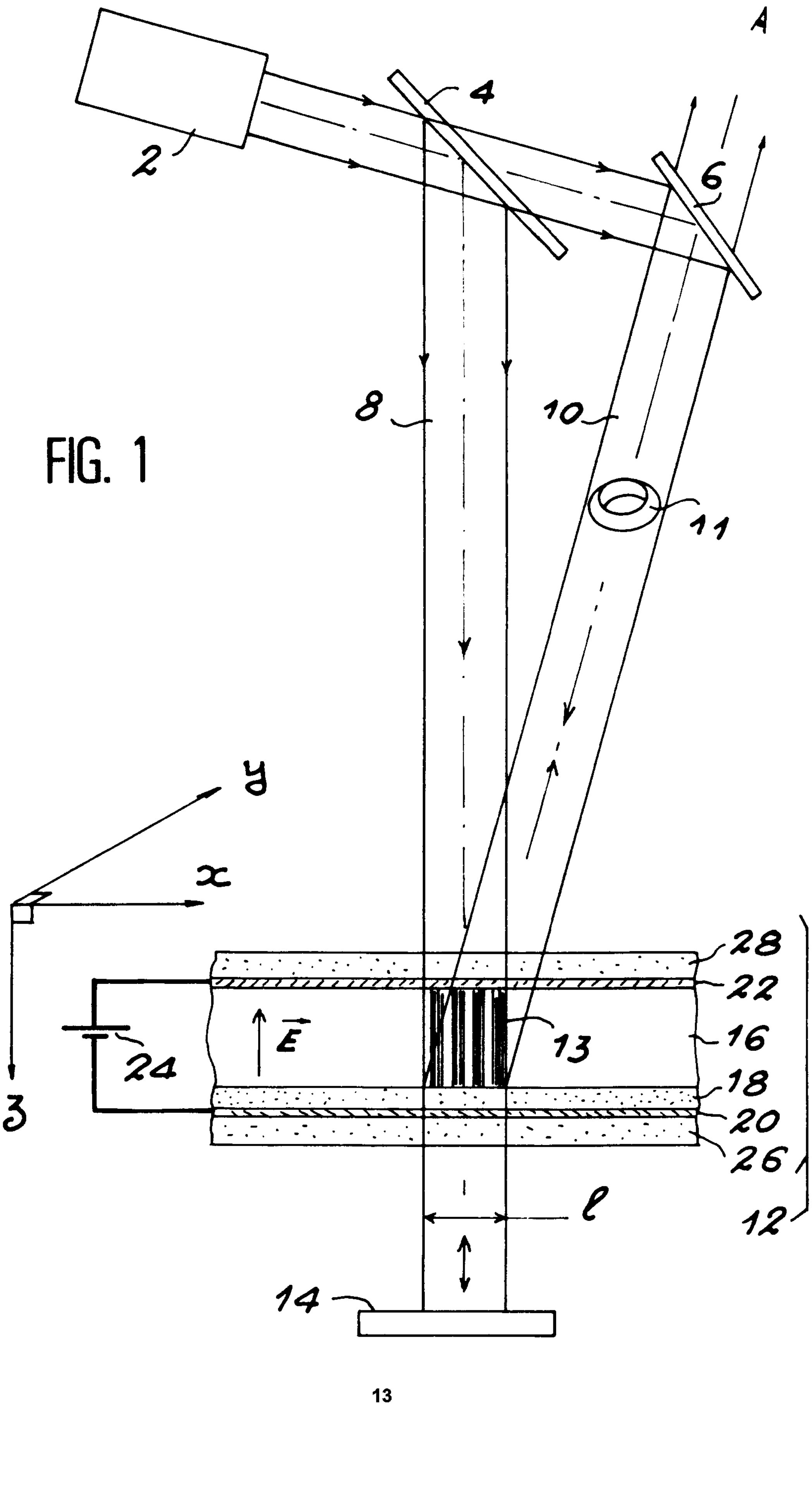


FIG. 1

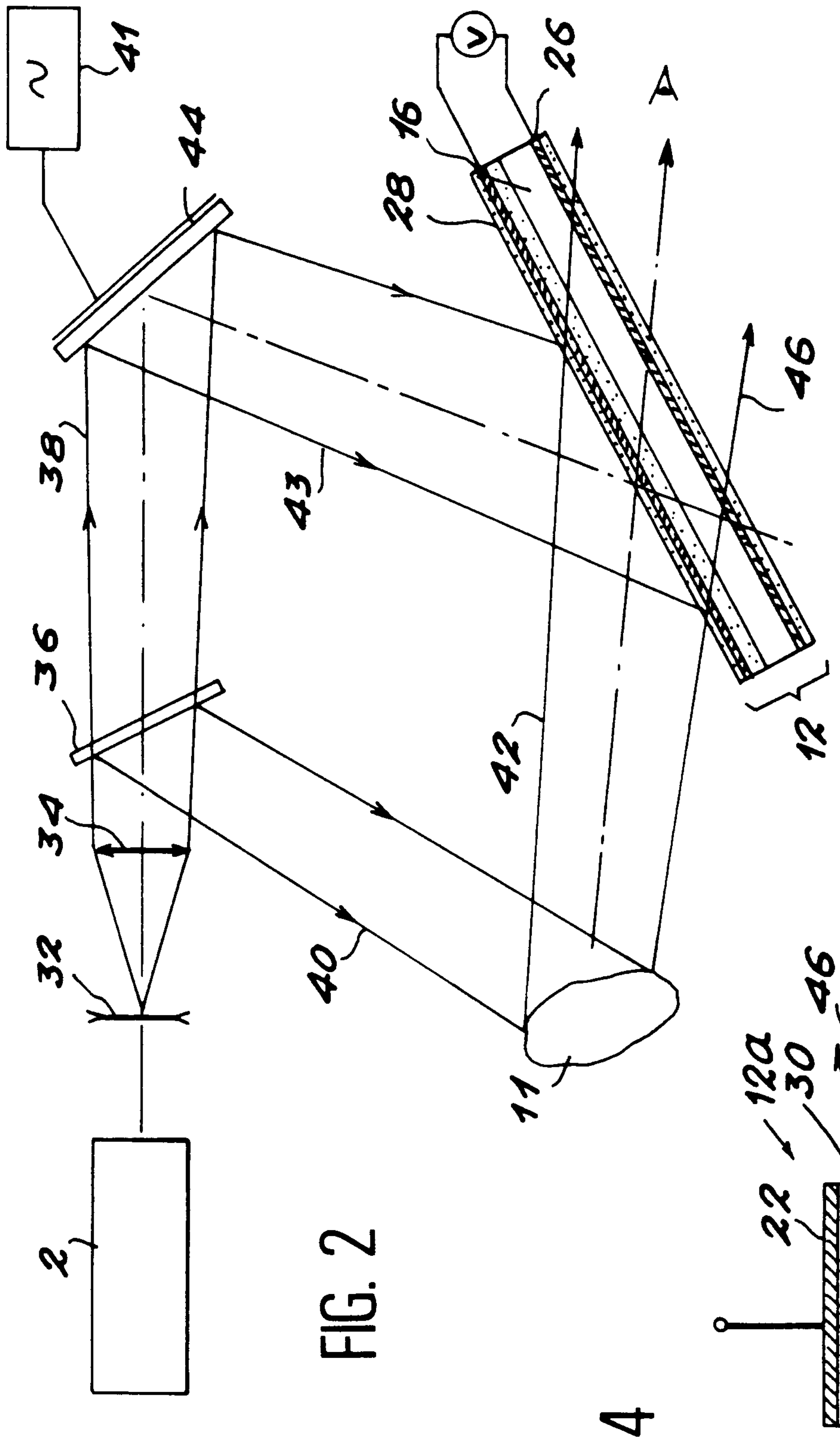
2
32
34
36
38
40
41
42
43
44
46
11
12
16
26
28
V

FIG. 2

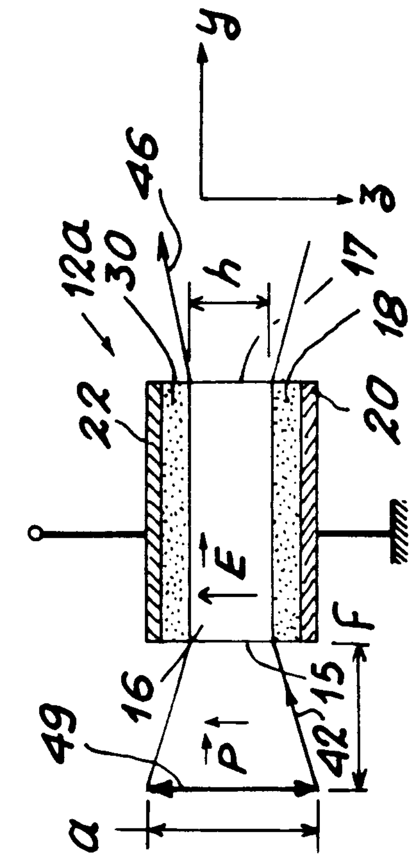
12a
30
46
h
17
18
20
22
E
F
15
16
42
49
P
a
y
z

FIG. 4

FIG. 3

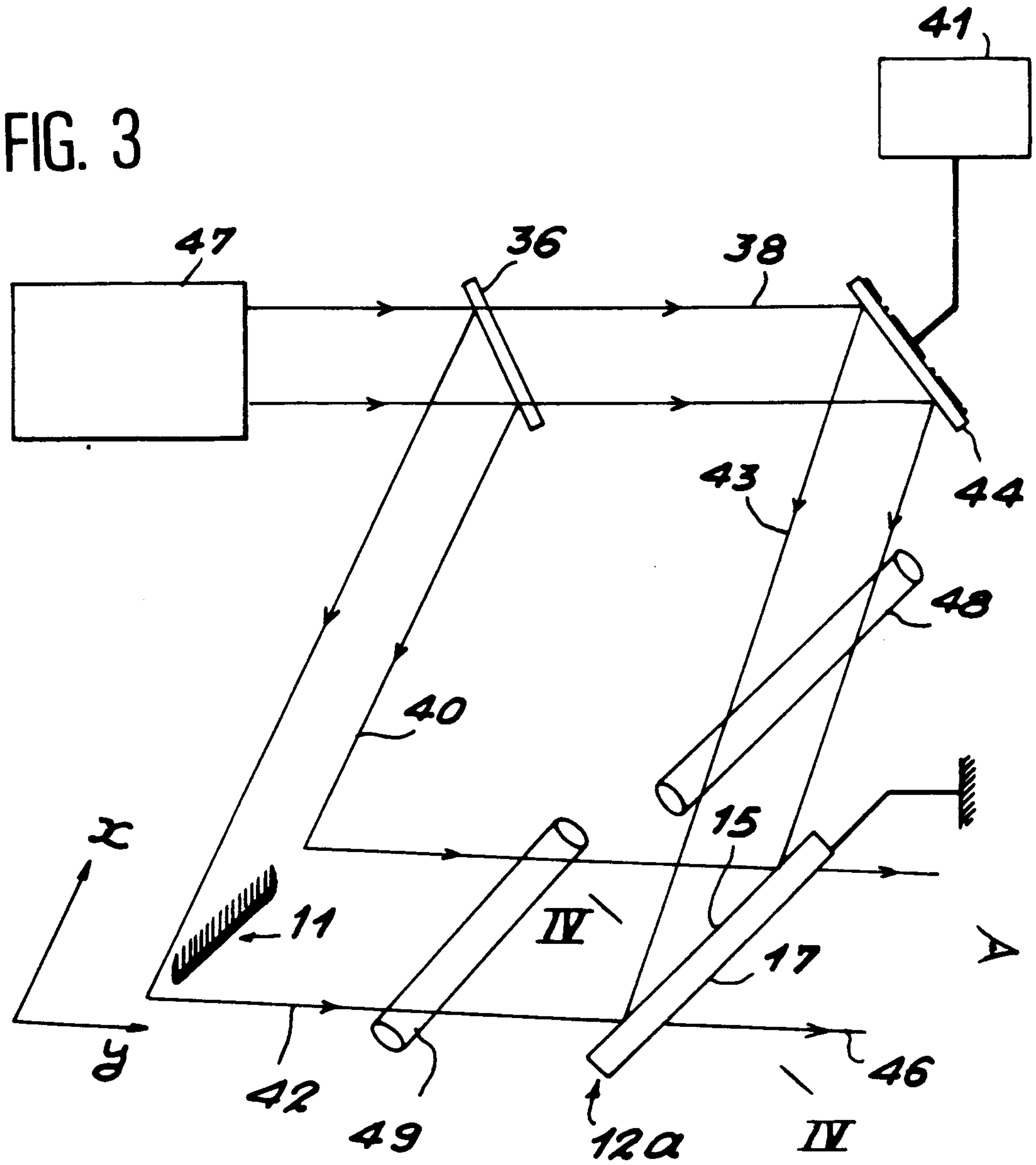
41
47
36
38
44
43
48
40
15
x
11
IV
17
y
42
49
12a
46
IV

FIG. 5

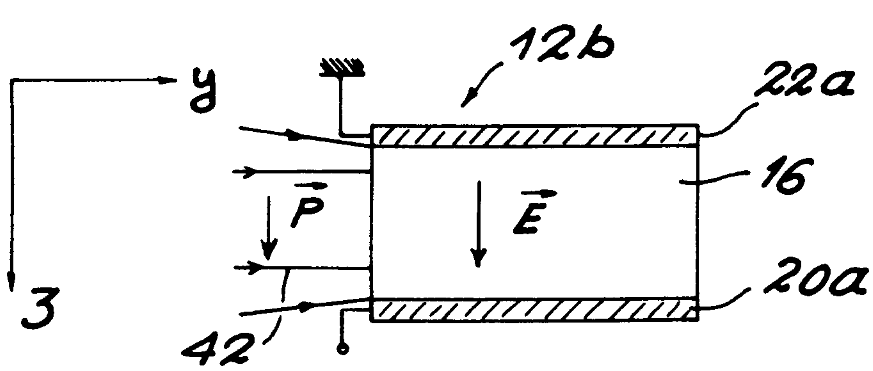
12b
22a
y
16
$\vec{P}$
$\vec{E}$
3
20a
42

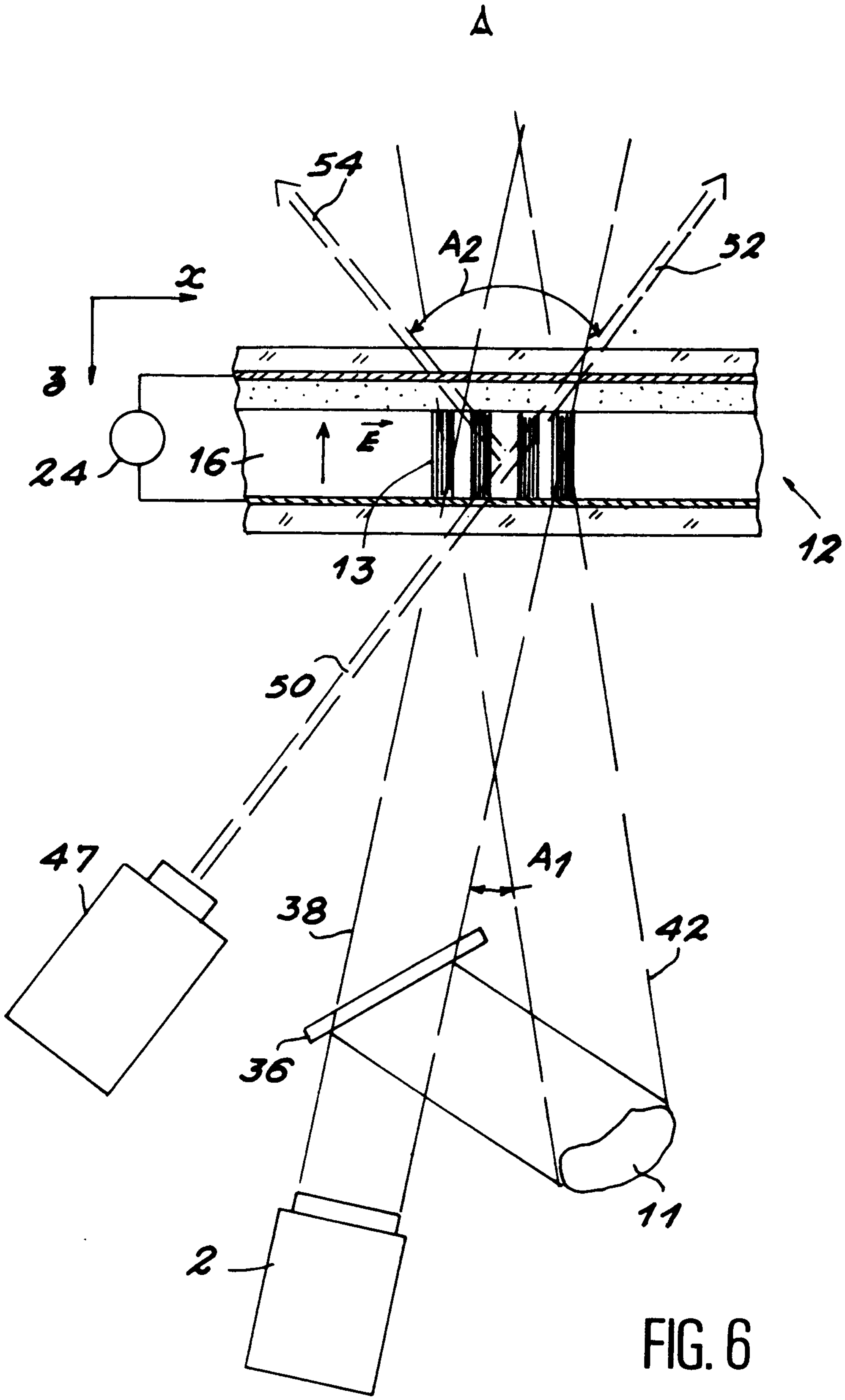


FIG. 6